Europäisches Patentamt

European Patent Office

Office européen des brevets

(11) Publication number: **0 123 696**
**A1**

# EUROPEAN PATENT APPLICATION

published in accordance with Art. 158(3) EPC

(21) Application number: **83903403.0**

(22) Date of filing: **21.10.83**

Data of the international application taken as a basis:

(86) International application number:
**PCT/JP 83/00370**

(87) International publication number:
**WO 84/01632 (26.04.84 84/11)**

(51) Int. Cl.³: **G 05 B 19/403**, B 23 Q 15/00

(30) Priority: **21.10.82 JP 185227/82**

(43) Date of publication of application: **07.11.84**
**Bulletin 84/45**

(84) Designated Contracting States: **DE FR GB**

(71) Applicant: **FANUC LTD, 5-1, Asahigaoka 3-chome Hino-shi, Tokyo 191 (JP)**

(72) Inventor: **KISHI, Hajimu, Hino Hirayamadai Jutaku 1104 6-7-8, Asahigaoka, Hino-shi Tokyo 191 (JP)**
Inventor: **SEKI, Masaki, 3-15-2-406, Takaidonishi Suginami-ku, Tokyo 168 (JP)**
Inventor: **TAKEGAHARA, Takashi, Janbohru Hachioji 604 4-1-9, Myoujin-cho, Hachioji-shi Tokyo 192 (JP)**

(74) Representative: **Billington, Lawrence Emlyn et al, HASELTINE LAKE & CO Hazlitt House 28 Southampton Buildings Chancery Lane, London WC2A 1AT (GB)**

(54) **METHOD OF PREPARING NC PART PROGRAM.**

(57) A method of preparing an NC part program for numerically-controlled machining includes a plurality of machining steps, e.g., a first machining step for machining workpiece (WK) into a roughly-machined shape ($P_5$–$P_4$–$P_3$–$P_2$–$P_1$), and a second machining step for machining the workpiece into a finished shape ($P_6$–$P_7$–$P_8$–$P_9$–$P_{10}$). The method comprises: inputting, for each machining step, at least the tool to be used TL1, TL2, the axial incremental quantity between a reference position (R) on a tool slide (TBS) and the end of the tool used, and positions ($P_5$ to $P_1$; $P_6$ to $P_{10}$) to be machined; preparing a subprogram for each machining step by employing these items of data; preparing a main program for calling the subprograms in the order of machining step; and combining the subprograms and the main program to prepare an NC part program.

0123696

<u>DESCRIPTION</u>

NC PART PROGRAM CREATION METHOD

<u>Technical Field</u>

This invention relates to an NC part program creation method in an automatic programming apparatus. More particularly, the invention relates to an NC part program creation method for creating an NC part program by combining a plurality of subprograms and a main program which calls the subprograms in machining process order.

<u>Background Art</u>

In an automatic programming apparatus for creating an NC part program, the prior art is such that an entire NC part program is created and outputted as a single program which is impossible to break down. That is, though a machining process can be broken down into a plurality of individual processes, an NC part program cannot be broken down machining process by machining process. Consequently, when it is desired to revise only the NC data of a certain machining process, it is necessary to create or re-edit the entire NC part program. This revision operation is troublesome and requires considerable labor. Furthermore, even if a certain machining process alone is to be replaced by another machining process to enable machining of a desired part contour, the prior art is such that the NC part program for machining the part must be created anew from the beginning each time.

Accordingly, an object of the present invention is to provide an NC part program creation method which enables an NC part program to be broken down by machining process, and which enables a program to be revised with ease.

Another object of the present invention is to provide an NC part program creation method wherein a subprogram is created for each and every machining process, as well as a main program for calling the subprograms in machining process order, whereby an NC part program can be broken down by machining process in subprogram units.

Still another object of the present invention is to provide an NC part program creation method wherein a desired NC part program can be obtained merely by revising a subprogram.

Yet another object of the present invention is to provide an NC part program creation method wherein a desired NC part program can be created by replacing a predetermined subprogram with another subprogram.

Disclosure of the Invention

The present invention is an NC part program creation method in an automatic programming apparatus for automatically creating an NC part program. The method includes creating a subprogram for each machining process, creating a main program for calling the subprograms in machining process order to cause an NC apparatus to execute numerical control processing in accordance with the subprograms, and creating an NC part program by combining the main program and subprograms. According to the invention, an NC part program can be broken down into each of the machining processes in subprogram units, thereby making it possible to simplify the processing for NC part program revision and creation.

Brief Description of the Drawings

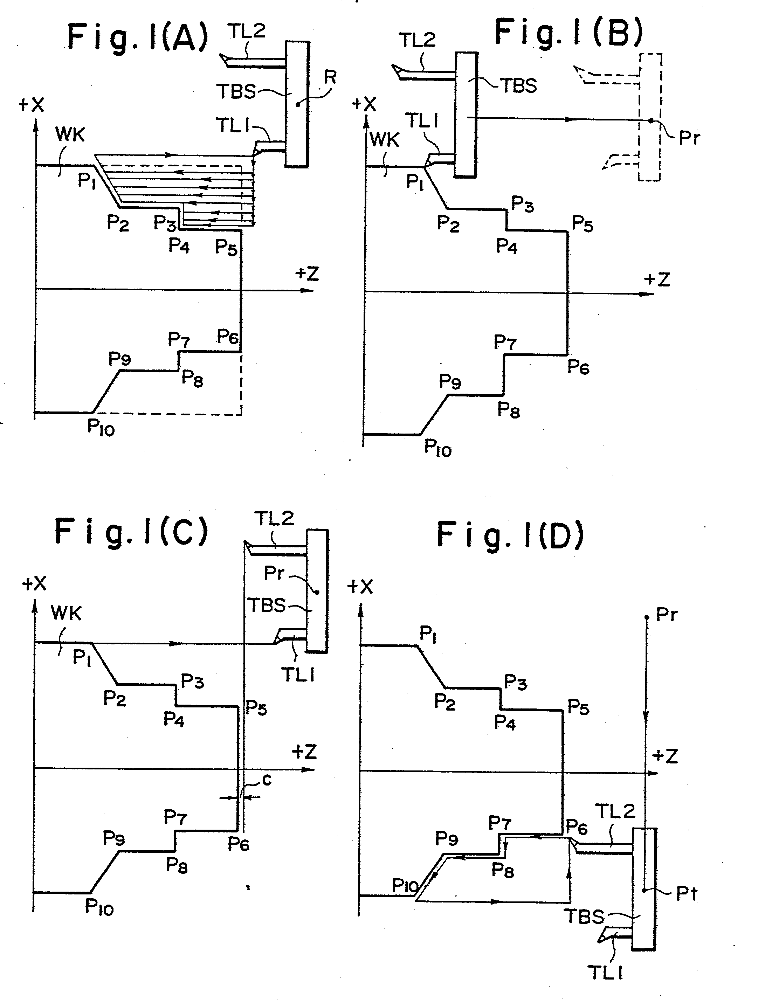

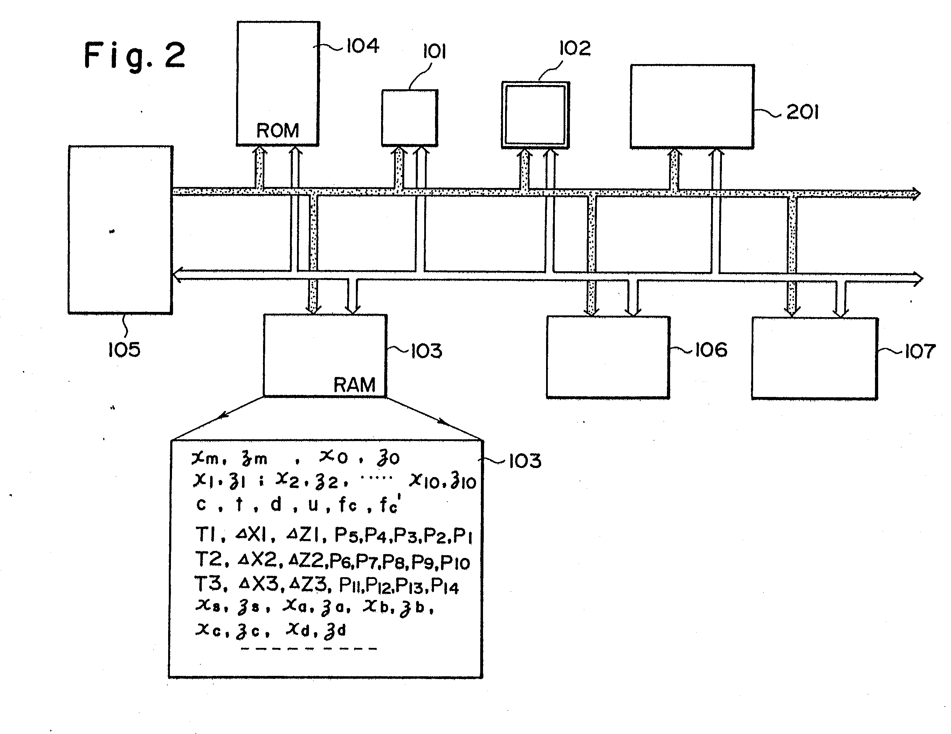

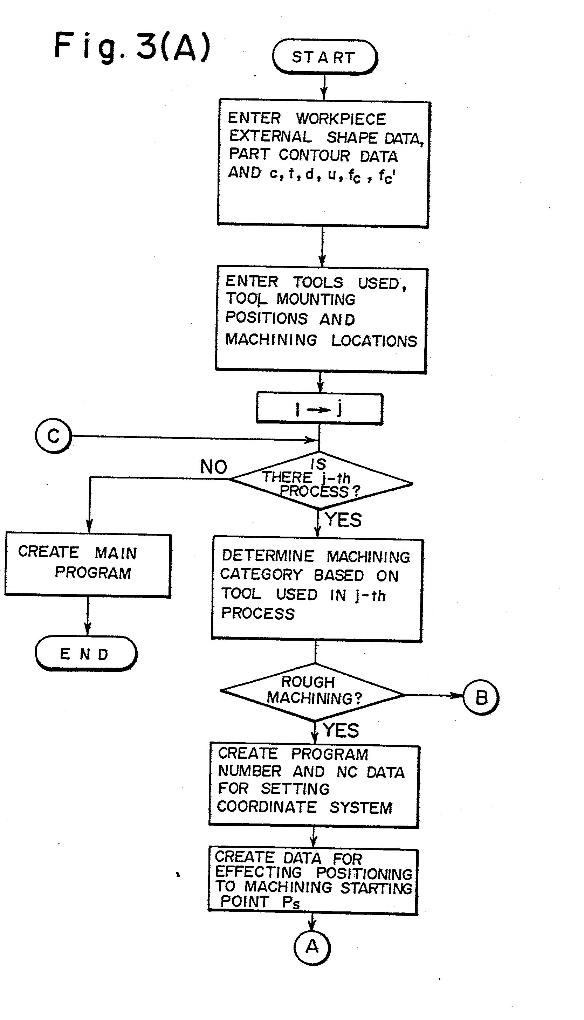

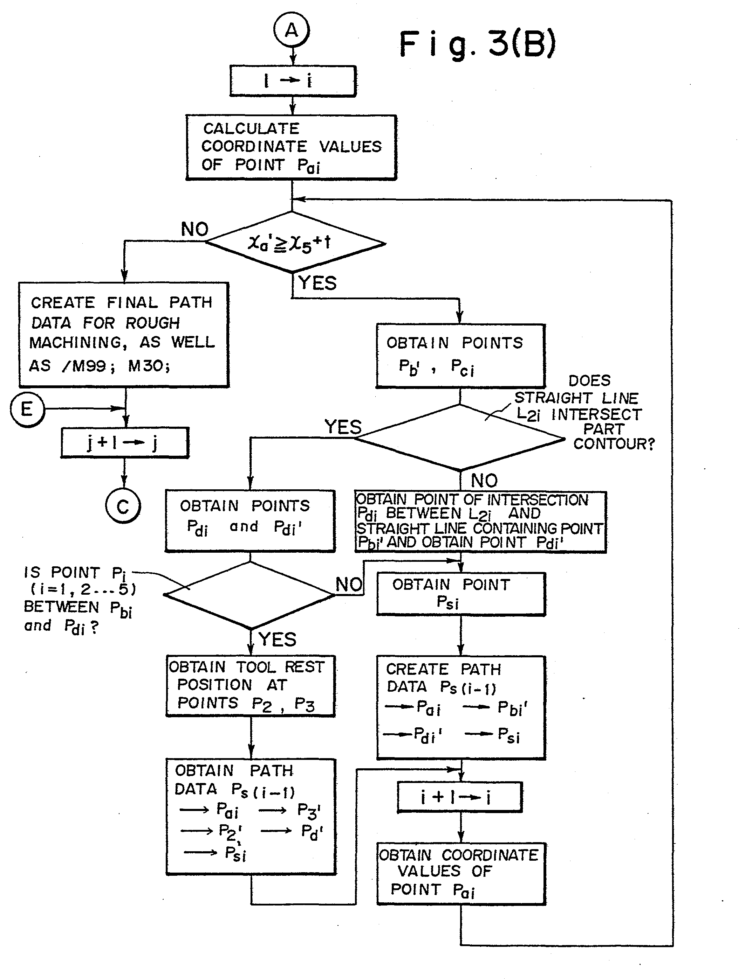

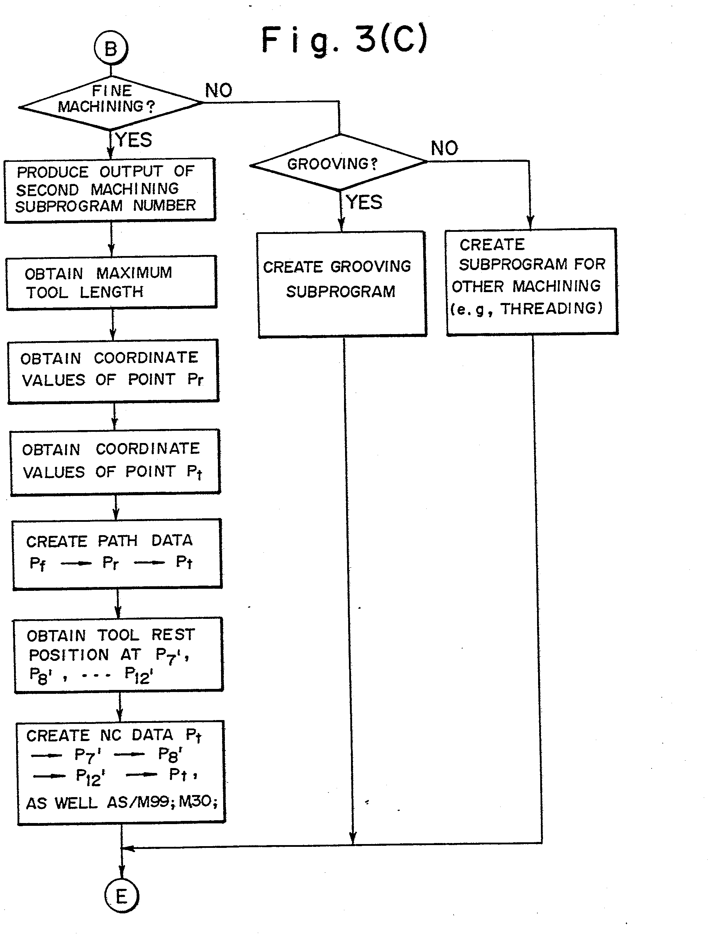

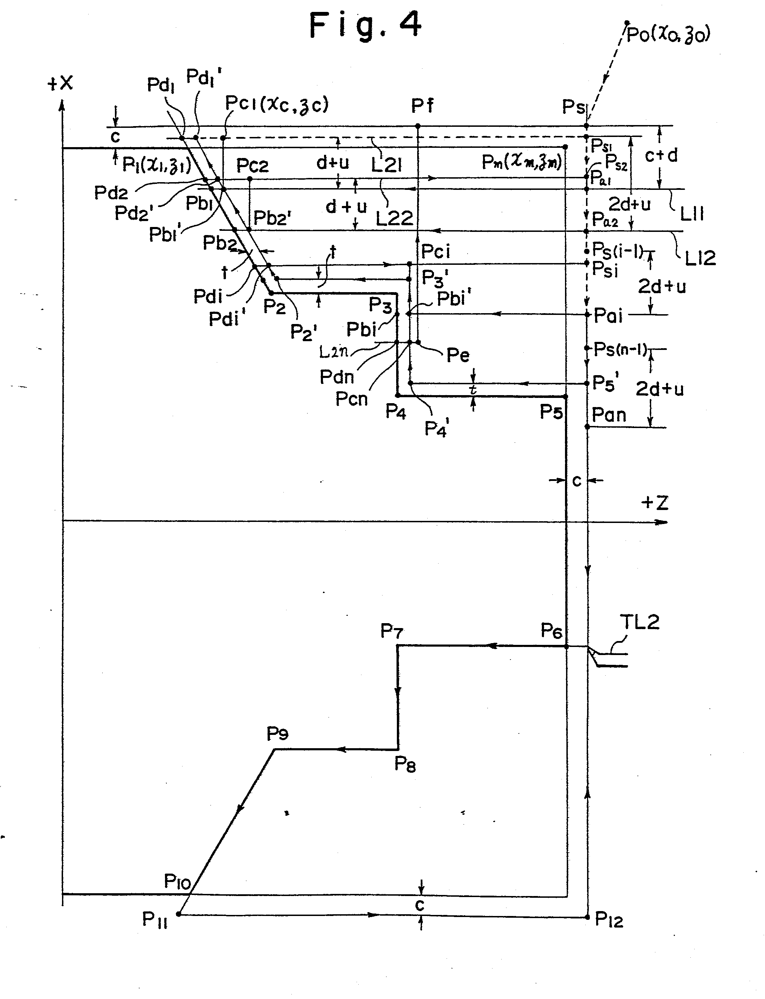

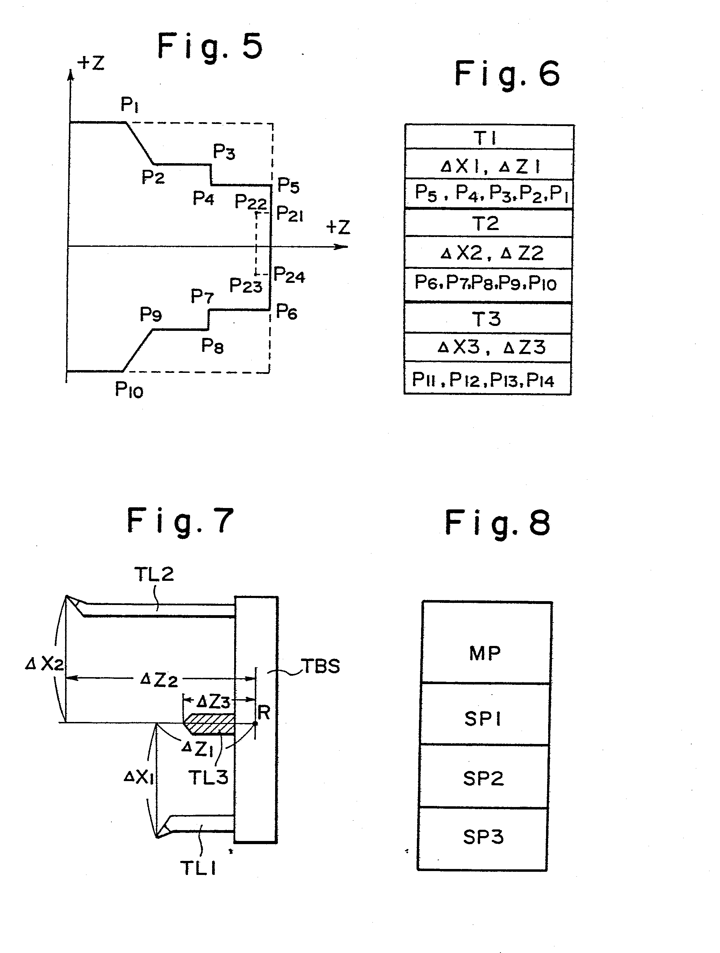

Fig. 1 is a view for explaining machining performed by a comb blade-type lathe, Fig. 2 is a block diagram of an automatic programming apparatus to which the present invention appertains, Fig. 3 is a flowchart of processing according to the present invention, Fig. 4 is a view for explaining a tool path according to the present invention, Fig. 5 is a view showing the final contour of a part displayed on a CRT, Fig. 6 is a view for explaining an example of data input for each machining process, Fig. 7 is a view for explaining a tool mounting position in a comb blade-type tool rest, and Fig. 8 is a view for explaining a created part program.

Best Mode for Carrying Out the Invention

Conventionally, an NC part program for a part machined by first, second and third machining processes is created in the following fashion:

```
O 1234

N001 G50X ... Z ... ;        ⎫
          ┊                   ⎬  First process
          ┊                   ⎭
```

-4-

```
N00i G50X ... Z ... ;  ⎫
        .                ⎬  Second process
        .              ⎭

N00j G50X ... Z ...    ⎫
        .                ⎬  Third process
        .              ⎭

M30;
```

wherein the letter of the alphabet "O" is a word address indicating that the number which follows is a program number, the letter of the alphabet "N" is a word address indicating that the numerical value which follows is a sequence number, "G50" is a G-function instruction for setting a coordinate system, and "M30" is an M-function instruction ("end of program") indicating the end of data. Further, though not shown in the foregoing program, NC data specifying tool path are inserted after the "G50" in each process. In addition, the first, second and third processes are, e.g., coarse machining, fine machining and grooving machining in a lathe.

In the present invention, on the other hand, subprograms 1, 2 and 3 are created for respective ones of the machining processes, a main program for calling the subprograms is created, and the subprograms 1 through 3 and the main program are combined to create an NC part program which is capable of being broken down into each of the machining processes. The foregoing is illustrated as follows:

```
O0001;

N001 G50X ... Z ... ;
        :
        :
/M99;

M30;        .......... Subprogram 1


O0002;

N001 G50X ... Z ... ;
        :
        :
/M99;

M30;        .......... Subprogram 2


O0003;

N001 G50X ... Z ... ;
        :
        :
/M99;

M30;        .......... Subprogram 3


O1234;

M98P0001;

M98P0002;

M98P0003;

M30;        .......... Main program
```

wherein "M98" is a subprogram call instruction for calling a subprogram having the program number which follows the letter of the alphabet "P", "M99" indicates "end of subprogram", "M30" indicates "end of program, and "/" is an optional skip instruction. A block

-6-

having the "/" instruction is skipped when an optional skip button on an operator's panel is ON, and is executed when the button is OFF.

A detailed description will now be had with regard to a case where the present invention is applied to creation of a part program for a comb blade-type lathe.

Fig. 1 is a view for explaining machining processes in a comb blade-type lathe, in which one face of a tool rest TBS is provided with two tools TL1, TL2. We will assume that a workpiece WK having a stock contour indicated by the dashed line is to be machined into the part contour indicated by the solid line, that the portion $P_1$-$P_2$-$P_3$-$P_4$-$P_5$ of the part contour is to be subjected to coarse machining in the first quadrant by the tool TL1, which is for coarse machining, and that the portion $P_6$-$P_7$-$P_8$-$P_9$-$P_{10}$ of the part contour is to be subjected to fine machining in the fourth quadrant by the tool TL2, which is for fine machining.

First, the tool TL1 is moved as in turning work performed by an ordinary turret lathe [see the fine lines in the first quadrant of Fig. 1(A)] to provide a coarse machined part contour indicated by $P_1$-$P_2$ ... $P_5$ [see Fig. 1(B)]. This corresponds to a first machining process.

Next, by transporting the tool rest TBS along the X axis, the tool rest TBS is moved to a Z-axis position $P_r$ where the tools TL1, TL2 do not contact the workpiece WK [Fig. 1(C)]. Thereafter, the tool rest TBS is transported along the X axis [Fig. 1(D)] to a point $P_t$ where the X-axis position of the tool TL2 for fine machining coincides with the X-axis coordinate value of a position $P_6$ where machining performed by the tool is to start. Thenceforth, the tool rest is transported along the path $P_6 \longrightarrow P_7 \longrightarrow P_8 \longrightarrow P_9 \longrightarrow P_{10}$ to perform fine machining by using the selected tool TL2. This corresponds to a second machining process.

A part program for the foregoing turning work is prepared by entering part dimensions, tool selection sequence, the machining location of each tool and the distance (tool mounting location or dimensions) of each tool from a reference position, and creating a main program and subprograms from these input data.

An NC part program creation method according to the present invention will now be described with reference to the block diagram of Fig. 2, the processing flowchart of Fig. 3, and the path explanatory view of Fig. 4. Note that the description will cover grooving machining as a third machining process.

(1) First, a keyboard 101 and display unit 102 shown in Fig. 2 are used to enter data specifying the external shape of the workpiece WK, e.g., coordinate values $x_m$, $z_m$ (see Fig. 4) of a point $P_m$, part contour, e.g., coordinate values $x_i$, $y_i$ of a point $P_i$ (i=1, 2 ... 10), coordinate values $x_o$, $y_o$ of an initial

-8-

position $P_O$ of the tool, a clearance quantity c during coarse machining, a finishing allowance t, depth of cut d for one pass, finishing increment u, coarse cutting speed $f_c$, and fine cutting speed $f_c'$. These data are stored in a RAM 103. Stock contour and part contour are displayed on the display unit 102, as shown in Fig. 5.

(2) Next, as shown in Fig. 6, the tool used, the tool mounting position and the location to be machined by the tool are entered and stored in the RAM 103 in the order of the machining process. The tool used is expressed by the letter of the alphabet "T" and a one-digit numerical value following "T". The tool mounting position, as shown in Fig. 7, is expressed by the distance (actually an incremental value along the corresponding axis) from a reference point R on the tool rest TBS to the tool nose of the respective tool TL1, TL2 or TL3. The tool used and the mounting position of the tool are specified by entering a tool number "$T_\Delta$" and incremental values "$\Delta X_i$, $\Delta Y_i$" for each of the prescribed tools. The location to be machined by each tool is specified by point numbers $P_1$, $P_2$ ... $P_{24}$. Specifically, a machining location is specified by entering these numbers from the keyboard 101. Thus, the input information stored in the RAM 103 will be:

$$T_1 : \Delta X_1, \Delta Z_1 : P_5, P_4, P_3, P_2, P_1;$$
$$T_2 : \Delta X_2, \Delta Z_2 : P_6, P_7, P_8, P_9, P_{10};$$

$$T_3 : \Delta X_3, \ \Delta Z_3 \ : \ P_{21}, \ P_{22}, \ P_{23}, \ P_{24}$$

assuming that coarse machining is to be performed along $P_5$ through $P_1$ by the tool TL1 for coarse machining, fine machining is to be performed along $P_6$ through $P_{10}$ by the tool TL2 for fine machining, and grooving is to be performed along $P_{21}$ through $P_{24}$ by the grooving tool TL3. It should be noted that $T_1$, $T_2$, $T_3$ are the tool numbers of the tools TL1, TL2, TL3.

(3) When all data necessary for NC part program creation are entered through steps (1), (2) above, a control program for part program creation stored in a ROM 104 of Fig. 2 starts to be run, and a processor 105, through processing described below, creates a subprogram for each machining process, creates a main program for calling the subprograms in machining process order, and creates, in a RAM 106, a part program obtained by combining the sub- and main programs. The processing for creating the subprograms and main program will now be described.

(3a-1) The processor 105 determines whether a j-th machining process (where the initial value of j is 1) exists. If it does, the category of machining process (coarse machining, fine machining, grooving, threading, etc.) is recognized from the tool used in the process. A table 107 in Fig. 2 stores the correlation between machining category and the tool used to performing the machining. The processor 105 identifies the category of the j-th machining process based on the table.

(3a-2) In order to create a subprogram for rough machining, which is the first machining process (j=1), the processor 105 generates a subprogram number for the j-th machining process, namely:

O 000j

The processor stores the number in the RAM 106 and then uses the initial position $(x_o, z_o)$ of the tool rest TBS stored in the RAM 103 to create NC data for setting the coordinate system, namely:

G50 $Xx_o$ $Zz_o$ ;

The processor stores this data in the RAM 106.

(3a-3) The processor 105 then calculates the position $x_s$, $z_s$ of the tool rest TBS that will prevail when the nose of the tool TL1 is situated at the machining starting point $P_s$, which is spaced from the point $P_m$ (Fig. 4) by the clearance c along the X and Z axes. This position of the tool rest is calculated from the following equations:

$$x_m + c + {}_\Delta X_1 \longrightarrow x_s$$
$$z_m + c + {}_\Delta Z_1 \longrightarrow z_s$$

When the coordinates of the machining starting point $P_s$ have been calculated, the processor creates the following data for effecting positioning from the initial position to the machining starting point $P_s$:

G00 $Xx_s$ $Zz_s$ ;

and stores the data in the RAM 106.

(3a-4) Next, the processor 105 performs the

operation 1 $\longrightarrow$ i and calculates the position $x_a$, $z_a$ of the tool rest TBS that will prevail when the nose of the tool TL1 is situated at a point $P_{ai}$ (= $P_{al}$), which is spaced from the machining starting point $P_s$ by (c+d) along the -X axis. This position of the tool rest is calculated from the following equations:

$$x_m - d + {}_\Delta X_1 \longrightarrow x_a$$
$$z_m + c + {}_\Delta Z_1 \longrightarrow z_a$$

(3a-4) After $x_a$, $z_a$ are calculated, the processor 105 determines whether the following holds:

$$x_a' \geq (x_5 + t)$$

(where $x_a'$, $x_5$ are the X-axis coordinate values of points $P_{ai}$ (= $P_{al}$) and $P_5$, respectively).

(3a-5) If $x_a' \geq (x_5 + t)$ holds, the processor 105 obtains a point $P_{bi}$ (= $P_{bl}$), which is where a straight line $L_{1i}$ parallel to the Z axis and passing through the point $P_{ai}$ intersects the part contour, and then obtains the position $x_b$, $z_b$ of the tool rest TBS that will prevail when the nose of the tool TL1 is situated at a point $P_{bl}'$, which is spaced from the machining starting point $P_{bl}$ by the finishing margin t along the +Z axis. The processor also calculates the coordinate values $x_c$, $z_c$ of a point $P_{cl}$ spaced from the point $P_{bl}'$ by (d+u) along the +X axis. These coordinate values are calculated from the following equations:

$$x_b' + d + u \longrightarrow x_c$$
$$z_b' \longrightarrow z_c$$

-12-

(where $x_b'$, $z_b'$ are the coordinate values of the point $P_{b1}'$).

(3a-6) The processor 105 then determines whether a straight line $L_{2i}$ (= $L_{21}$) parallel to the Z axis and passing through the point $P_{c1}$ intersects the part contour.

(3a-7) If the straight line $L_{21}$ does not intersect the part contour, the processor 105 obtains the point of intersection $P_{d1}$ between the straight line $L_{21}$ and the extension of a straight line segment $\overline{P_2 P_1}$ containing the point $P_{b1}$, which straight line segment is from among the straight light segments $\overline{P_5 P_4}$, $\overline{P_4 P_3}$, $\overline{P_3 P_2}$, $\overline{P_2 P_1}$ that specify the part contour. Thereafter, the processor calculates the position $x_d$, $z_d$ of the tool rest that will prevail when the nose of the tool TL1 is at a point $P_{d1}'$, which is spaced from the point of intersection $P_{d1}$ by the finishing margin t.

(3a-8) Next, the processor 105 calculates the position $x_s$, $z_s$ of the tool rest TBS that will prevail when the nose of the tool TL1 is at the next machining starting point $P_{s1}$. This position is calculated from the following equations:

$$x_c + \Delta X_1 \longrightarrow x_s$$
$$x_m + c + \Delta Z_1 \longrightarrow z_s$$

(3a-9) When the coordinate values of each of the points occupied by the tool rest TBS have been found through the foregoing steps, the processor 105 uses these coordinate values to create and store the following in the RAM 106:

$$G00 \ Xx_a \ Zz_a \ ;$$

$$G01 \ Xx_b \ Zz_b \ Ff_c \ ;$$

$$Xx_d \ Zz_d \ ;$$

$$G00 \ Xx_s \ Zz_s \ ;$$

(3a-10)  The processor 105 then performs the operation $i+1 \longrightarrow i$ and calculates the position $x_a$, $z_a$ of the tool rest TBS that will prevail when the nose of the tool TL1 is situated at a point $P_{ai} \ (= P_{a2})$, which is spaced from the machining starting point $P_{s1}$ by $(2d+u)$ along the -X axis.  This position of the tool rest is calculated from the following equations:

$$x_s - (2d + u) \longrightarrow x_a$$

$$z_s \longrightarrow z_a$$

Thereafter, the processor repeats the process steps from step (3a-4) onward.

(3a-11)  If the straight line $L_{2i}$ (e.g., straight line $L_{22}$) is found to intersect the part contour at point $P_{di}$ in step (3a-6), then the processor calculates the position $x_d$, $z_d$ of the tool rest TBS that will prevail when the nose of the tool TL1 is situated at a point $P_{di}'$, which is spaced from the point of intersection $P_{di}$ by the finishing margin t.

(3a-12)  Next, the processor 105 determines whether points $P_1$ through $P_5$, which specify the part contour, are located between points $P_{bi}$ and $P_{di}$.  If the points $P_1$ through $P_5$ are not located between $P_{bi}$ and $P_{di}$, then processing from step (3a-8) onward is repeated.

(3a-13)  If at least one of the points $P_1$ through $P_5$ ($P_2$, $P_3$ in this case) lies between point $P_{bi}$ and point $P_{di}$ in step (3a-12), then the processor obtains the positions $x_3'$, $z_3'$; $x_2'$, $z_2'$ of the tool rest TBS that will prevail when the nose of the tool TL1 is at points $P_3'$, $P_2'$, which are spaced from the points $P_3$, $P_2$ by the finishing margin t along the +X and +Z axes, respectively.  These positions are obtained from the following equations:

$$x_3 + t + {}_\Delta X_1 \longrightarrow x_3'$$
$$z_3 + t + {}_\Delta Z_1 \longrightarrow z_3'$$
$$x_2 + t + {}_\Delta X_1 \longrightarrow x_2'$$
$$z_2 + t + {}_\Delta Z_1 \longrightarrow z_2'$$

The processor 105, through processing similar to that of step (3a-8), then obtains the position $x_s$, $z_s$ of the tool rest TBS that will prevail when the nose of the tool TL1 is at the next machining starting point $P_{si}$. Thereafter, the processor uses the coordinate values of each of the positions occupied by the tool rest to create and store the following data in the RAM 106:

$$G00 \ Xx_a \ Zz_a \ ;$$
$$G01 \ Xx_b \ Zz_b \ Ff_c \ ;$$
$$X_{x3}' \ Z_{z3}' \ ;$$
$$X_{x2}' \ Z_{z2}' \ ;$$
$$X_{xd'} \ Z_{zd} \ ;$$
$$G00 \ Xx_s \ Zz_s \ ;$$

This is followed by repeating processing from step (3a-10) onward.

(3a-14) If $x_a < (x_5 + t)$ is found to hold in step (3a-4), the processor calculates the position $x_5'$, $z_5'$ of the tool rest TBS that will prevail when the nose of the tool TL1 is situated at the point $P_5'$, which is spaced from the point $P_5$ by the finishing margin t along the +X axis and by the clearance c along the +Z axis. This position of the tool rest is calculated from the following equations:

$$x_5 + c + \Delta X_1 \longrightarrow x_5'$$
$$z_5 + c + \Delta Z_1 \longrightarrow z_5'$$

The processor also calculates the position $x_4'$, $z_4'$ of the tool rest TBS that will prevail when the nose of the tool TL1 is situated at the point $P_4'$, which is spaced from the point $P_4$ by the finishing margin t along the +X and +Z axes. This position of the tool rest is calculated from the following equations:

$$x_4 + c + \Delta X_1 \longrightarrow x_4'$$
$$z_4 + c + \Delta Z_1 \longrightarrow z_4'$$

This is followed by obtaining the coordinate values $x_c$, $z_c$ of a point $P_{cn}$, which is spaced from the point $P_4'$ by (d+u) along the +X axis. These coordinate values are obtained from the following equations:

$$x_4 + t + d + u \longrightarrow x_c$$
$$z_4 + t \longrightarrow z_c$$

The processor then obtains the position $x_d'$, $z_d'$ of a point $P_{dn}$ at which the part contour is intersected by a straight line L2n parallel to the Z axis and passing through the point $P_{cn}$, followed by the coordinate values $x_d$, $z_d$; $x_e$, $z_e$ of the tool rest TBS that will prevail when the nose of the tool TL1 is at points $P_{dn}'$ $(=P_{cn})$, $P_e$, which are spaced from the point $P_{dn}$ by the finishing margin t and by the clearance c, respectively, along the +Z axis. These coordinate values are obtained from the following equations:

$$x_d' + \Delta X_1 \longrightarrow x_d$$
$$z_d' + t + \Delta Z_1 \longrightarrow z_d$$
$$x_d \longrightarrow x_e$$
$$z_d' + c + \Delta Z_1 \longrightarrow z_e$$

The processor then obtains the position $x_f$, $z_f$ of the tool rest TBS that will prevail when the nose of the tool TL1 is at the machining end point $P_f$, the position being found from the equations:

$$x_m + c + \Delta X_1 \longrightarrow x_f$$
$$z_e \longrightarrow z_f$$

When the coordinate values of the tool rest TBS at each of the points have been found through the foregoing steps, the processor 105 creates and stores the following in the RAM 106:

```
G00 Xx5' Zz5' ;
G01 Xx4' Zz4' Ffc ;
    Xxd Zzd ;
    Xxe Zze ;
G00 Xxf Zzf ;
/M99 ; M30 ;
```

The foregoing ends processing for creating the

-17-

subprogram of the first machining process (coarse machining).

Upon completing processing for creating the subprogram of the first machining operation, the processor 105 executes processing to create a subprogram SP2 for the second machining process for performing fine machining, which subprogram includes fine machining work and control of tool rest movement.

When coarse machining is completed, the tool rest TBS is retracted along the +Z axis from the coarse machining end point $P_f$ to the point $P_r$ in Fig., 1(C), and is then transported along the -X axis from point $P_r$ to point $P_t$ in Fig. 1(D). This positions the fine machining tool TL2 at the fine machining starting point along the shortest traveling distance without the tools striking the workpiece WK.

(3b-1) Accordingly, the processor 105 generates, and stores in the RAM 106, the following subprogram number of the second machining process:

O 0002

(3b-2) The processor then obtains the maximum tool length $(_\Delta Z_2)$ from among $_\Delta Z_1$, $_\Delta Z_2$, $_\Delta Z_3$ and subsequently calculates the coordinate values $x_r$, $z_r$ of the point $P_r$ from the following equations:

$$x_m + c \longrightarrow x_r$$
$$x_6 + _\Delta Z_2 + c \longrightarrow z_r$$

It should be noted that $z_6$ is the Z-axis coordinate value of the point P6.

(3b-3)   The processor 105 also calculates the coordinates values $x_t$, $z_t$ of the point $P_t$ from the following equations:

$$-(x_6 + \Delta X_2) \longrightarrow x_t$$

$$z_r \longrightarrow z_t$$

It should be noted that $x_6$ is the X-axis coordinate value of the point $P_6$.

(3b-4)   When the points $P_r$, $P_t$ have been found, the processor creates and stores the following NC data in the RAM 106:

$$G\ 00\ Xx_r\ Zz_r\ ;$$

$$Xx_t\ Zz_t\ ;$$

Thus, the processor creates NC data for movement along the +Z axis from point $P_f$ to point $P_r$, and NC data for movement along the -X axis from point $P_r$ to point $P_t$.

(3b-5)   Next, the processor 105 calculates the positional coordinate values $x_i'$, $z_i'$ (i = 7, 8 ... 12) of the tool rest TBS that prevail when the nose of the tool TL2 (Fig. 4) is situated at points $P_7$, $P_8$, $P_9$, $P_{10}$, $P_{11}$, $P_{12}$, respectively.   These coordinate values are calculated from the following equations:

$$x_i - \Delta X_2 \longrightarrow x_i'$$

$$z_i - \Delta Z_2 \longrightarrow z_i'$$

(where i = 7, 8, 9, 10)

$$x_{10} - c - \Delta X_2 \longrightarrow x_{11}'$$

$$z_{11} + \Delta Z_2 \longrightarrow z_{11}'$$

$$x_{11}' \longrightarrow x_{12}'$$

-19-

$$z_6 + c + {}_\Delta z_2 \longrightarrow z_{12}{}'$$

where $z_{11}$ is the Z-axis coordinate value of the point of intersection between straight lines $P_9 P_{10}$, $P_{11} P_{12}$.

(3b-6) When the coordinates $x_i{}'$, $z_i{}'$ have been obtained, the processor creates, and stores in the RAM 106, the following path data for transporting the tool TL2 along the fine machining path:

```
G01 Xx_7' Zz_7' Ff_c ;
    Xx_8' Zz_8' ;
    Xx_9' Zz_9' ;
    Xx_11' Zz_11' ;
G00 Xx_12' Zz_12' ;
    Xx_t Zz_t ;
/M99 ; M30 ;
```

Thus, performing steps (3b-1) through (3b-6) ends processing for the creation of a subprogram for the second machining process (fine machining).

(3c) Thereafter, a subprogram SP3 for the third machining process, which program includes grooving machining work and control of tool rest movement for cutting a groove, is created through steps similar to those for creation of the subprogram SP2. This will complete the processing for the creation of all subprograms.

(3d) When all subprograms have been created, the processor 105 completes creation of the part program by creating a main program for calling the subprograms in machining process order. The part program is stored in

the RAM 106 in the order shown in Fig. 8, namely in the order of the main program MP, subprogram SP1, subprogram SP2 and subprogram SP3. The part program stored in the RAM 106 is subsequently delivered as an output to a tape puncher or magnetic unit 201.

According to the present invention, a part program is created by creating a subprogram for each and every machining process, creating a main program for calling the subprograms in the machining process order, and combining the main program and subprograms. The NC part program is therefore capable of being broken down by machining process. Accordingly, in revising an NC part program, the revision can be carried out in simple fashion merely by entering the revised data to create a subprogram and replacing the corresponding subprogram by the correct subprogram just created.

Industrial Applicability

The present invention is well-suited for application to creation of an NC part program in a numerically controlled machine tool.

CLAIMS:

1. An NC part program creation method in an automatic programming apparatus which automatically creates an NC part program for numerically controlled machining comprising a plurality of machining processes, characterized by including steps of creating a subprogram for each machining process, creating a main program for calling the subprograms in machining process order to cause an NC apparatus to execute numerical control processing in accordance with said subprograms, and creating an NC part program by combining the main program and subprograms.

2. An NC part program creation method according to claim 1, characterized by including a step of dividing and entering, according to machining process, data necessary for creating the subprograms for respective ones of the machining processes.

3. An NC part program creation method according to claim 2, characterized in that said data includes at least data specifying a tool used, an incremental quantity along each axis from a reference position on a tool rest, on which said tool is mounted, to a distal end of said tool, and data specifying machining location.

4. An NC part program creation method according to claim 3, characterized by storing beforehand correlation between tool type and machining category, identifying from said correlation a machining category corresponding to a tool used, and creating a subprogram in accordance with said machining category by using said data.

5. An NC part program creation method according to claim 2, characterized by including steps of revising said data, creating a subprogram by said data, and substituting said subprogram for a subprogram to be revised.

Fig.1(A)

Fig.1(B)

Fig.1(C)

Fig.1(D)

# Fig. 2

104 ROM

101

102

201

105

103

103 RAM

106

107

$$x_m, \ z_m \quad , \quad x_0 \ , \ z_0$$
$$x_1, z_1 \ ; \ x_2, z_2, \ \cdots \cdots \ x_{10}, z_{10}$$
$$c \ , \ t \ , \ d \ , \ u, \ f_c \ , \ f_c'$$
$$T_1, \ \Delta X_1, \ \Delta Z_1, \ P_5, P_4, P_3, P_2, P_1$$
$$T_2, \ \Delta X_2, \ \Delta Z_2, P_6, P_7, P_8, P_9, P_{10}$$
$$T_3, \ \Delta X_3, \ \Delta Z_3, \ P_{11}, P_{12}, P_{13}, P_{14}$$
$$x_s, z_s, \ x_a, z_a, \ x_b, z_b,$$
$$x_c, z_c, \ x_d, z_d$$

0123696

# Fig. 3(A)

START

ENTER WORKPIECE
EXTERNAL SHAPE DATA,
PART CONTOUR DATA
AND $c, t, d, u, f_c, f_c'$

ENTER TOOLS USED,
TOOL MOUNTING
POSITIONS AND
MACHINING LOCATIONS

$1 \rightarrow j$

Ⓒ

IS THERE j-th PROCESS?  — NO

YES

CREATE MAIN
PROGRAM

END

DETERMINE MACHINING
CATEGORY BASED ON
TOOL USED IN j-th
PROCESS

ROUGH MACHINING? → Ⓑ

YES

CREATE PROGRAM
NUMBER AND NC DATA
FOR SETTING
COORDINATE SYSTEM

CREATE DATA FOR
EFFECTING POSITIONING
TO MACHINING STARTING
POINT $P_s$

Ⓐ

# Fig. 3(B)

(A)

$$I \rightarrow i$$

CALCULATE
COORDINATE VALUES
OF POINT $P_{ai}$

$\chi_a' \geqq \chi_5 + t$ — NO / YES

**NO →** CREATE FINAL PATH DATA FOR ROUGH MACHINING, AS WELL AS /M99; M30;

(E) →

$$j + I \rightarrow j$$

(C)

**YES →** OBTAIN POINTS $P_b'$, $P_{ci}$

DOES STRAIGHT LINE $L_{2i}$ INTERSECT PART CONTOUR?

**YES →** OBTAIN POINTS $P_{di}$ and $P_{di}'$

**NO →** OBTAIN POINT OF INTERSECTION $P_{di}$ BETWEEN $L_{2i}$ AND STRAIGHT LINE CONTAINING POINT $P_{bi}'$ AND OBTAIN POINT $P_{di}'$

IS POINT $P_i$ $(i=1,2\dots5)$ BETWEEN $P_{bi}$ and $P_{di}$?

**NO →** OBTAIN POINT $P_{si}$

**YES →** OBTAIN TOOL REST POSITION AT POINTS $P_2$, $P_3$

OBTAIN PATH DATA $P_{s(i-1)}$
$\longrightarrow P_{ai} \longrightarrow P_3'$
$\longrightarrow P_2', \longrightarrow P_d'$
$\longrightarrow P_{si}$

CREATE PATH DATA $P_{s(i-1)}$
$\longrightarrow P_{ai} \longrightarrow P_{bi}'$
$\longrightarrow P_{di}' \longrightarrow P_{si}$

$$i + I \rightarrow i$$

OBTAIN COORDINATE VALUES OF POINT $P_{ai}$

# Fig. 3(C)

Flowchart:

(B)

FINE MACHINING? — NO → GROOVING? — NO → CREATE SUBPROGRAM FOR OTHER MACHINING (e.g, THREADING)

FINE MACHINING? — YES ↓
GROOVING? — YES → CREATE GROOVING SUBPROGRAM

YES path:

PRODUCE OUTPUT OF SECOND MACHINING SUBPROGRAM NUMBER

↓

OBTAIN MAXIMUM TOOL LENGTH

↓

OBTAIN COORDINATE VALUES OF POINT $P_r$

↓

OBTAIN COORDINATE VALUES OF POINT $P_t$

↓

CREATE PATH DATA $P_f \longrightarrow P_r \longrightarrow P_t$

↓

OBTAIN TOOL REST POSITION AT $P_7'$, $P_8'$, $\cdots P_{12}'$

↓

CREATE NC DATA $P_t \longrightarrow P_7' \longrightarrow P_8' \longrightarrow P_{12}' \longrightarrow P_t$, AS WELL AS/M99; M30;

↓

(E)

Fig. 4

# Fig. 5

# Fig. 6

| T1 |
|---|
| $\Delta X1, \Delta Z1$ |
| $P_5, P_4, P_3, P_2, P_1$ |
| T2 |
| $\Delta X2, \Delta Z2$ |
| $P_6, P_7, P_8, P_9, P_{10}$ |
| T3 |
| $\Delta X3, \Delta Z3$ |
| $P_{11}, P_{12}, P_{13}, P_{14}$ |

# Fig. 7

# Fig. 8

| MP |
|---|
| SP1 |
| SP2 |
| SP3 |

# INTERNATIONAL SEARCH REPORT

International Application No. PCT/JP83/00370

0123696

## I. CLASSIFICATION OF SUBJECT MATTER (if several classification symbols apply, indicate all) [3]

According to International Patent Classification (IPC) or to both National Classification and IPC

Int. Cl.[3] G05B 19/403, B23Q 15/00

## II. FIELDS SEARCHED

### Minimum Documentation Searched [4]

| Classification System | Classification Symbols |
|---|---|
| I P C | G05B 19/18, 19/403 |

| | Documentation Searched other than Minimum Documentation to the Extent that such Documents are Included in the Fields Searched [5] |
|---|---|
| | Jitsuyo Shinan Koho          1926 – 1983 |
| | Kokai Jitsuyo Shinan Koho    1971 – 1983 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| X,Y | JP,A, 53-134183 (Mitsubishi Electric Corp.), 22. November. 1978  (22. 11. 78) | 1 – 5 |
| Y | JP,A, 54-86887 (Toyoda Machine Works, Ltd.), 10. July. 1979  (10. 07. 79) & US,A, 4209847 & EP,A1, 2750 & ES,A, 476238 | 3, 4 |

* Special categories of cited documents: [15]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance: the claimed invention cannot be considered novel or cannot be considered to involve an inventive step
"Y" document of particular relevance: the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search [19] | Date of Mailing of this International Search Report [19] |
|---|---|
| January 6, 1984  (06. 01. 84) | January 17, 1984  (17. 01. 84) |

| International Searching Authority [19] | Signature of Authorized Officer [20] |
|---|---|
| Japanese Patent Office | |

Form PCT/ISA/210 (second sheet) (October 1981)